# DEMANDE DE BREVET EUROPEEN

(11) **EP 1 447 277 A1**
(43) Date de publication de la demande: **18.08.2004**
(21) Numéro de dépôt: 04290301.3
(22) Date de dépôt: 05.02.2004
(51) Int. Cl.: B60R 5/04

(54) **Tablette arrière d'insonorisation d'un habitacle de véhicule automobile**

(30) Priorité: 12.02.2003 FR 0301698
(71) Demandeur: Centre d'Etude et de Recherche pour l'Automobile ( CERA), 51100 Reims (FR)
(72) Inventeur: Fortez, Maurice, 92170 Vanves (FR)
(74) Mandataire: Geismar, Thierry

(57) **Abrégé**

L'invention concerne une tablette arrière (1) de véhicule automobile destinée à séparer l'habitacle du compartiment à bagages du véhicule. La tablette (1) comprend un panneau supérieur (2) du côté de l'habitacle du véhicule et un panneau inférieur (3) du côté du compartiment à bagages qui sont associés de sorte à former une cavité (4) entre eux. Les panneaux comprennent chacun des orifices (5, 6) qui sont prévus au voisinage d'une extrémité opposée de chaque panneau, de sorte à être en communication avec la cavité (4). Un élément d'absorption acoustique (7) est disposé à l'intérieur de la cavité. Au moins un élément d'étanchéité acoustique est prévu sur au moins une partie de la périphérie de la tablette (1).

L'invention concerne également un procédé de réalisation d'une telle tablette.

L'invention concerne également un compartiment à bagages comprenant une telle tablette.

## Description

L'invention concerne une tablette arrière de véhicule automobile destinée à séparer l'habitacle du compartiment à bagages du véhicule ainsi que son procédé de fabrication. L'invention concerne également un compartiment à bagages comprenant une telle tablette.

Il est connu d'utiliser une tablette arrière d'un véhicule automobile qui permet de favoriser l'isolation acoustique de l'habitacle du véhicule automobile. Une telle tablette peut comprendre deux parties chacune munie d'orifices de façon à former un trajet pour les ondes acoustiques circulant entre l'habitacle et le compartiment à bagages. Ces parties sont associées entre elles pour former une cavité. Un élément d'absorption acoustique est disposé dans la cavité pour absorber les ondes acoustiques circulant dans la cavité. La cavité présente en outre une forme de chicane afin de favoriser le rebondissement des ondes contre les parois de la cavité et augmenter ainsi le trajet d'absorption.

Les passages d'air dans la tablette sont nécessaires pour l'évacuation de l'air généré par la ventilation de l'habitacle. Ces passages permettent également d'évacuer les surpressions, notamment en cas du déploiement d'un airbag dans l'habitacle.

Cependant, l'efficacité d'une tablette, telle que décrite ci-dessus, est réduite par des fuites acoustiques, c'est à dire que toutes les ondes acoustiques ne passent pas par le trajet dans la cavité et ne sont donc pas absorbées à l'intérieur de celle-ci.

L'invention se propose de résoudre ce problème en disposant un élément spécifique autour de la périphérie de la tablette afin de forcer les ondes acoustiques à passer dans le trajet prévu dans la cavité de la tablette. Les ondes sont ainsi toutes absorbées dans la cavité et l'efficacité de la tablette est accrue.

De ce fait, une telle tablette est avantageuse en ce qu'elle permet d'éviter d'avoir à traiter l'habillage du compartiment à bagages, qui comprend typiquement un garnissage des passages de roues, un garnissage de seuil et un tapis de coffre, avec des éléments d'absorption et/ou d'isolation acoustique. Ceci se traduit par une réduction conséquente du poids du véhicule ainsi que par une réduction des coûts de production.

A cet effet l'invention concerne une tablette arrière de véhicule automobile destinée à séparer l'habitacle du compartiment à bagages du véhicule. La tablette comprend un panneau supérieur, qui est destiné à être disposé du côté de l'habitacle du véhicule, et un panneau inférieur, qui est destiné à être disposé du côté du compartiment à bagages, qui sont associés de sorte à former une cavité entre eux. Les panneaux comprennent chacun des orifices qui sont prévus au voisinage d'une extrémité opposée de chaque panneau, de sorte à être en communication avec la cavité. Un élément d'absorption acoustique est disposé à l'intérieur de la cavité. Au moins un élément d'étanchéité acoustique est prévu sur au moins une partie de la périphérie de la tablette.
Selon une réalisation, des organes de compartimentation transversale sont prévus dans la cavité.

Selon un autre aspect, l'invention concerne un procédé de réalisation d'une tablette arrière comprenant les étapes suivantes :
- former les panneaux supérieur et inférieur en matériau étanche, les panneaux étant muni de leurs orifices ;
- disposer l'élément d'absorption acoustique sur une face d'au moins un panneau ;
- assembler les panneaux inférieur et supérieur par fixation de leurs périphéries en formant une cavité entre eux ;
- disposer l'élément d'étanchéité acoustique sur au moins une partie de la périphérie de la tablette.

Selon une autre réalisation, le procédé comprend les étapes suivantes :
- réaliser, par extrusion et soufflage, une cavité pourvue d'orifices dans sa partie supérieure et inférieure ;
- disposer un élément d'absorption acoustique à l'intérieur de la cavité ;
- surmouler la cavité par de la mousse en introduisant la cavité dans un moule dans lequel on injecte un mélange précurseur de mousse
- disposer l'élément d'étanchéité acoustique sur au moins une partie de la périphérie de la tablette.

D'autres objets et avantages de l'invention apparaîtront au cours de la description qui suit, faite en référence aux dessins annexés.

La figure 1 est une vue schématique en coupe d'une tablette arrière selon une réalisation de l'invention, la tablette est représentée disposée entre les sièges arrières et le hayon du véhicule automobile.

La figure 2 est une représentation schématique en perspective d'une tablette arrière selon une autre réalisation de l'invention, ladite représentation montrant en pointillés des organes de compartimentation qui sont disposés dans la cavité.

La figure 3 est une vue schématique de dessus d'une tablette arrière selon une troisième réalisation.

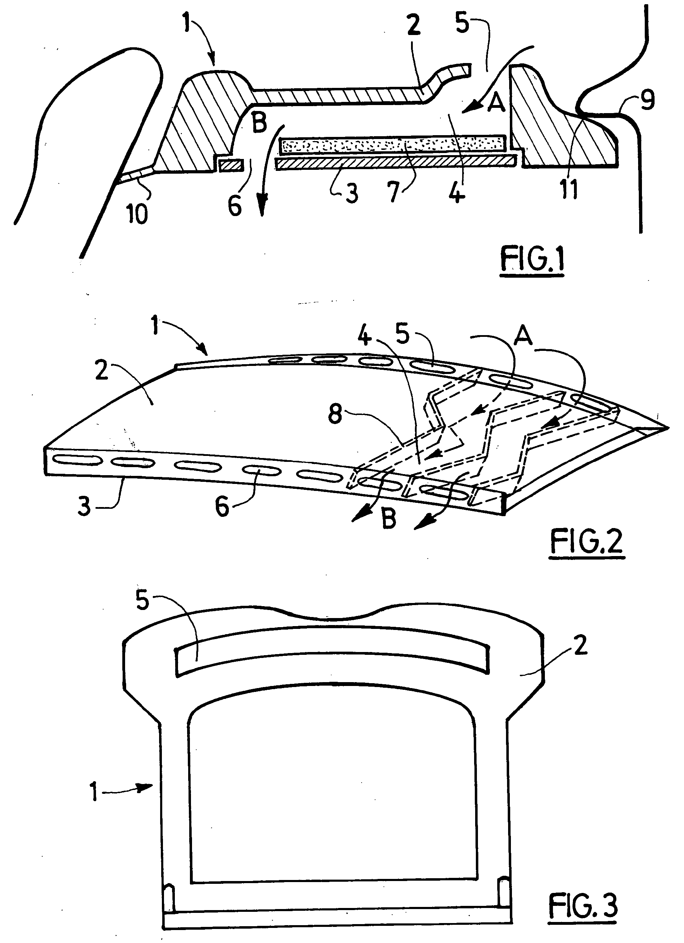

En référence à la figure 1, la tablette arrière 1 comprend deux parties, un panneau supérieur 2 et un panneau inférieur 3. Une telle tablette est destinée à être disposée entre les sièges arrières et le hayon d'un véhicule automobile, avec le panneau supérieur 2 du côté de l'habitacle et le panneau inférieur 3 du côté du compartiment à bagages du véhicule.

La tablette 1 est réalisée en un matériau étanche à l'air, de la mousse de polyuréthanne rigide ou du polypropylène par exemple. En outre, les panneaux peuvent être pourvus d'un revêtement d'aspect.

Les deux panneaux 2 et 3 sont associés de façon à former une cavité 4 entre eux. Chaque panneau comprend en outre des orifices 5, 6 en communication avec la cavité 4 et avec l'habitacle d'une part et le compartiment à bagages d'autre part.

Les orifices 5 du panneau supérieur 2 sont situés au voisinage d'une extrémité du panneau, l'extrémité arrière par exemple (figure 1), c'est à dire celle située vers l'arrière du véhicule.

Les orifices 6 du panneau inférieur 3 sont situés au voisinage de l'extrémité du panneau opposée à celle où sont placés les orifices 5, au voisinage de l'extrémité avant du panneau inférieur 3 (figure 1), c'est à dire proche des sièges arrières du véhicule.

Les orifices 5 et 6 peuvent être répartis régulièrement sur la surface du panneau supérieur, respectivement sur la surface du panneau inférieur, ainsi que représenté sur la figure 2.

Dans un exemple particulier, la largeur des orifices est au moins trois fois moindre que la longueur de la cavité 4, de sorte à améliorer l'isolation acoustique.

Selon un autre mode de réalisation représenté sur la figure 3, les orifices 5 et 6 se présentent sous la forme de fentes.

Selon des variantes de réalisation, les orifices 5 et 6 peuvent être pourvus de caches (non représentés) agencés pour permettre le passage des ondes acoustiques. Ces caches peuvent être des grilles ou des clapets par exemple.

Ces orifices en communication avec la cavité permettent de définir un trajet d'absorption acoustique pour les ondes acoustiques circulant entre l'habitacle et le compartiment à bagages du véhicule. Ce trajet est représenté par les flèches A et B sur les figure 1 et 2.

Afin d'absorber les ondes circulant dans la cavité 4 de la tablette, on dispose dans celle-ci un élément d'absorption acoustique 7. Cet élément est par exemple disposé sur la face supérieure, c'est à dire celle tournée vers la cavité, du panneau inférieur 3. On peut également envisager de le disposer sur l'intégralité de la surface intérieure de la cavité 4.

Cet élément 7 peut comprendre un matériau poreux et/ou fibreux afin de lui conférer de bonnes caractéristiques d'absorption acoustique. Ainsi, il peut se présenter sous la forme d'une plaque de feutre, comme représenté sur la figure 1. L'épaisseur de cette plaque de feutre est supérieure ou égale à 5 mm, notamment comprise entre 7 et 15 mm. Les ondes acoustiques circulant dans la cavité et entrant en contact avec l'élément 7 sont ainsi absorbées.

Selon une réalisation, le panneau inférieur 3 et le panneau supérieur 2 sont réalisés en matériaux différents. En particulier, le matériau du panneau inférieur 3 présente une masse surfacique supérieure ou égale à celle du matériau du panneau supérieur 2. Une telle caractéristique permet d'améliorer les propriétés d'absorption acoustique de la tablette 1, en prévoyant que l'élément d'absorption acoustique soit disposé sur la face supérieur du panneau inférieur.

Pour améliorer les caractéristique d'absorption, il est souhaitable de faire un trajet d'absorption le plus long possible. Pour ce faire, la cavité 4 présente une forme de chicane comme on peut le voir sur la figure 1. Cette forme favorise les rebondissements des ondes contre les parois de la cavité, ce qui augmente les chances qu'une onde entre en contact avec l'élément d'absorption acoustique 7.

Selon un mode de réalisation représenté sur la figure 2 et afin d'augmenter encore le trajet d'absorption des ondes acoustiques dans la cavité 4, on peut prévoir de compartimenter la cavité 4.

Pour ce faire, des organes de compartimentation transversale peuvent être prévus dans la cavité 4. Ces organes se présentent sous la forme de parois ondulées 8 comme représenté sur la figure 2. Ces parois sont réalisées en un matériau étanche à l'air, les mêmes que ceux employés pour les panneaux supérieur ou inférieur par exemple.

Les parois 8 s'étendent du panneau inférieur au panneau supérieur sur la longueur de la cavité et délimitent, deux à deux, un chemin d'air entre un orifice 5 du panneau supérieur 2 et un orifice 6 du panneau inférieur 3. Elles ont pour fonction d'augmenter le trajet d'absorption des ondes acoustiques en favorisant des rebondissements supplémentaires des ondes contre les parois, comme représenté sur la figure 2 par la flèche A. Les ondes ont ainsi plus de chance d'entrer en contact avec l'élément d'absorption acoustique 7. La forme ondulée des parois permet d'augmenter encore le trajet d'absorption

Les parois 8 ont également une fonction de rigidification de la tablette arrière 1, en ce qu'elles permettent de limiter la déformation de la cavité 4.

Afin d'éviter les fuites acoustiques entre la tablette 1 et les parties attenantes du véhicule, des éléments d'étanchéité à l'air sont ajoutés autour de la périphérie de la tablette. Ces éléments permettent d'imposer le passage des ondes acoustiques, circulant entre l'habitacle et le compartiment à bagages, dans la cavité 4.

Ces éléments d'étanchéité peuvent comprendre une lèvre en élastomère 10 disposée autour de la périphérie avant de la tablette et venant en contact étanche avec la face arrière des sièges du véhicule (figure 1).

Les éléments d'étanchéité peuvent également comprendre un joint en mousse (non représenté) surmoulé autour d'au moins la périphérie avant de la tablette 1.

On peut également envisager de disposer la lèvre ou le joint sur toute la périphérie de la tablette.

Conformément à la figure 1, on peut prévoir une surface 11 s'étendant à partir de la périphérie de la tablette sur laquelle le garnissage 9 du hayon du véhicule automobile vient en appui assurant ainsi l'étanchéité entre la tablette et le hayon. Le hayon présente alors une forme adaptée, avec une saillie par exemple, destinée à venir en appui sur la surface 11.

Comme décrit plus haut, un compartiment à bagages comprenant une telle tablette ne nécessite aucun traitement supplémentaire de l'habillage du compartiment à bagages avec des éléments d'isolation acoustique, notamment en ce qui concerne le garnissage des passages de roues, le garnissage du seuil et le tapis de sol.

Deux modes de réalisation de procédé de réalisation d'une tablette 1, telle que décrite ci-dessus, vont maintenant être décrites.

Selon une première variante, le procédé de réalisation d'une tablette 1 comprend les étapes suivantes :
- former les panneaux supérieur et inférieur 2 et 3 en matériau étanche, les panneaux 2 et 3 étant munis de leurs orifices 5 et 6 ;
- disposer l'élément d'absorption acoustique 7 sur au moins une face d'au moins un panneau ;
- assembler les panneaux inférieur et supérieur 3 et 2 par fixation de leurs périphéries en formant une cavité entre eux ;
- disposer l'élément d'étanchéité acoustique sur au moins une partie de la périphérie de la tablette 1.

La tablette ainsi obtenue est en deux parties assemblées et seul le panneau supérieur 2 est porteur, c'est à dire qu'il assure seul le maintien de la tablette 1 sur la tôle du véhicule. Le panneau inférieur 3 ne repose pas sur la tôle du véhicule et ne porte pas la tablette (figure 1).

Dans le cas où la cavité 4 comprend des organes de compartimentation transversale (figure 2), une étape supplémentaire de formation d'au moins une paroi ondulée 8 en matériau étanche s'élevant à partir du panneau inférieur 3 et/ou du panneau supérieur 2 avant l'assemblage des deux panneaux est prévue, par exemple lors du moulage.

Selon un deuxième mode de réalisation, le procédé de réalisation d'une tablette 1 comprend les étapes suivantes :
- réaliser, par extrusion et soufflage, une cavité 4 pourvue d'orifices 5 et 6 dans ses parties supérieure et inférieure ;
- disposer un élément d'absorption acoustique 7 à l'intérieur de la cavité 4 ;
- surmouler la cavité 4 par de la mousse en introduisant la cavité dans un moule dans lequel on injecte un mélange précurseur de mousse ;
- disposer l'élément d'étanchéité acoustique sur au moins une partie de la périphérie de la tablette 1.

La tablette ainsi obtenue est alors monobloc, les panneaux supérieur 2 et inférieur 3 étant respectivement définis par les parties de mousse positionnées respectivement en regard des parties supérieure et inférieure de la cavité 4.

Dans le cas où l'élément d'étanchéité est un joint en mousse, celui-ci peut être réalisé lors du surmoulage de la cavité 4 en prévoyant une forme de moule adaptée.

## Revendications

1. Tablette arrière de véhicule automobile destinée à séparer l'habitacle du compartiment à bagages du véhicule, ladite tablette (1) comprenant un panneau supérieur (2), destiné à être disposé du côté de l'habitacle du véhicule, et un panneau inférieur (3), destiné à être disposé du côté du compartiment à bagages, qui sont associés de sorte à former une cavité (4) entre eux, lesdits panneaux comprenant chacun des orifices (5, 6) qui sont prévus au voisinage d'une extrémité opposée de chaque panneau, de sorte à être en communication avec ladite cavité, un élément d'absorption acoustique (7) étant disposé à l'intérieur de la cavité (4), ladite tablette étant **caractérisée en ce qu'**au moins un élément d'étanchéité acoustique est prévu sur au moins une partie de la périphérie de ladite tablette.

2. Tablette arrière selon la revendication 1, **caractérisée en ce que** l'élément d'étanchéité comprend une lèvre (10) en élastomère qui est associée au moins sur la périphérie avant de la tablette (1), ladite lèvre étant destinée à venir en appui contre le garnissage d'une partie du véhicule automobile lors du montage de la tablette.

3. Tablette arrière selon la revendication 1, **caractérisée en ce que** l'élément d'étanchéité comprend un joint en mousse qui est formé au moins sur la périphérie avant de la tablette (1), ledit joint étant destinée à venir en appui contre le garnissage d'une partie du véhicule automobile lors du montage de la tablette.

4. Tablette arrière selon l'une des revendications 1 à 3, **caractérisée en ce que** l'élément d'étanchéité comprend une surface (11 ) sur laquelle la garniture (9) du hayon du véhicule automobile est destinée à venir en appui.

5. Tablette arrière selon l'une des revendications 1 à 4, **caractérisée en ce que** l'élément d'absorption acoustique (7) est disposé sur la face supérieure du panneau inférieur (3).

6. Tablette arrière selon la revendication 5, **caractérisée en ce que** le panneau inférieur (3) est réalisé en un élément de masse surfacique supérieure ou égale à celle du matériau utilisé pour former le panneau supérieur (2).

7. Tablette arrière selon l'une des revendications 1 à 6, **caractérisée en ce que** des organes de compartimentation transversale sont prévus dans la cavité (4).

8. Tablette arrière selon la revendication 7, **caractérisée en ce que** les organes sont formés de parois ondulées (8) qui délimitent, deux à deux, un chemin d'air entre un orifice (5) du panneau supérieur (2) et un orifice (6) du panneau inférieur (3).

9. Tablette arrière selon l'une des revendications précédentes, **caractérisée en ce que** les orifices (5, 6) présentent une largeur au moins trois fois moindre que la longueur de la cavité (4).

10. Procédé de réalisation d'une tablette arrière selon la revendication 1 comprenant les étapes suivantes :
- former les panneaux supérieur (2) et inférieur (3) en matériau étanche, les panneaux étant munis de leurs orifices (5, 6) ;
- disposer l'élément d'absorption acoustique (7) sur au moins une face d'au moins un panneau ;
- assembler les panneaux inférieur (3) et supérieur (2) par fixation de leurs périphéries en formant une cavité (4) entre eux ;
- disposer l'élément d'étanchéité acoustique sur au moins une partie de la périphérie de la tablette (1 ).

11. Procédé de réalisation d'une tablette arrière selon la revendication 10, **caractérisé en ce qu'**il comprend une étape de formation d'au moins une paroi ondulée (8) en matériau étanche s'élevant à partir du panneau inférieur (3) et/ou du panneau supérieur (2), ladite paroi formant organe de compartimentation transversale.

12. Procédé de réalisation d'une tablette arrière selon la revendication 1 comprenant les étapes suivantes :
- réaliser, par extrusion et soufflage, une cavité (4) pourvue d'orifices (5, 6) dans ses parties supérieure et inférieure ;
- disposer un élément d'absorption acoustique (7) à l'intérieur de la cavité (4) ;
- surmouler la cavité (4) par de la mousse en introduisant la cavité dans un moule dans lequel on injecte un mélange précurseur de mousse ;
- disposer l'élément d'étanchéité acoustique sur au moins une partie de la périphérie de la tablette (1).

13. Procédé de réalisation d'une tablette arrière selon la revendication 12, **caractérisé en ce que** l'élément d'étanchéité est un joint en mousse qui est réalisé lors du surmoulage de la cavité (4).

14. Compartiment à bagage comprenant une tablette arrière selon l'une des revendications 1 à 9, des éléments de garnissage de passages de roues, un tapis de coffre, une garniture de seuil et/ou hayon, ledit compartiment étant **caractérisé en ce que** seul la tablette arrière comprend des éléments d'absorption acoustique.
